# EUROPÄISCHE PATENTSCHRIFT

(11) **EP 0 739 410 B1**
(45) Veröffentlichungstag und Bekanntmachung des Hinweises auf die Patenterteilung: **15.07.1998**
(21) Anmeldenummer: 95904543.6
(22) Anmeldetag: 03.01.1995
(51) Int. Cl.: C11D 3/37, C11D 3/00, B01F 17/00, C11D 1/66

(54) **OBERFLÄCHENAKTIVE MITTEL**
SURFACE-ACTIVE AGENTS
AGENTS TENSIOACTIFS

(30) Priorität: 12.01.1994 DE 4400637
(43) Veröffentlichungstag der Anmeldung: 30.10.1996
(73) Patentinhaber: Henkel Kommanditgesellschaft auf Aktien, 40191 Düsseldorf (DE)
(72) Erfinder: FABRY, Bernd, D-41352 Korschenbroich (DE)
(86) Internationale Anmeldenummer: EP9500009
(87) Internationale Veröffentlichungsnummer: WO9519418

(56) Entgegenhaltungen:
- DE-A- 3 324 258
- DE-A- 3 411 941
- GB-A- 2 137 221
- GB-A- 2 208 516
- DATABASE WPI Section Ch, Week 9220 Derwent Publications Ltd., London, GB; Class A97, AN 92-163827 & JP,A,04 103 696 ( KAO CORP) , 6.April 1992

## Beschreibung

### Gebiet der Erfindung

Die Erfindung betrifft oberflächenaktive Mittel mit einem Gehalt an Alkyl- und/oder Alkenyloligoglykosiden und schmutzabweisenden Polymeren.

### Stand der Technik

Polyesterfasern bestehen in der Regel aus Copolymeren von Ethylenglycol und Terephthalsäure und werden unter einer Vielzahl von Handelsnahmen wie z.B. Dacron^{(R)}, Fortrel^{(R)}, Kodel^{(R)} und Blue-C-Polyester^{(R)} vertrieben. Der hydrophobe Charakter der Polyestergewebe erschwert das Waschen, insbesondere wenn es darum geht, Ölanschmutzungen rückstandsfrei zu entfernen. Wie bekannt ist, lassen sich Ölanschmutzungen sehr viel leichter von hydrophilen Geweben wie z.B. Baumwolle als von hydrophoben Polyestergeweben entfernen. Dieser Unterschied ist darauf zurückzuführen, daß Baumwolle, die aus Celluloseeinheiten aufgebaut ist, über eine Vielzahl von hydrophilen Gruppen verfügt und somit eine hohe Affinität zu Wasser besitzt, während dies für Polyestergewebe nicht zutrifft.

Eine weitere Ursache für die zu beobachtenden Unterschiede besteht darin, daß Ölanschmutzungen auf hydrophilen Geweben zur Bildung von leicht entfernbaren Tröpfchen neigen. Bei Polyestergeweben beobachtet man hingegen wegen des hydrophoben Charakters des Gewebes und der fehlenden Affinität zum Wasser, daß der ölige Schmutz von den Fasern festgehalten wird.

Wegen der hohen Beliebtheit von Polyestergeweben besteht am Markt ein großes Bedürfnis nach oberflächenaktiven Mitteln, die die Hydrophilie der Gewebe in einem solchen Maß verbessern, daß eine leichte Entfernung insbesondere öliger Anschmutzungen sichergestellt werden kann.

In der Vergangenheit hat es nicht an Versuchen gemangelt, diesem Problem abzuhelfen. Insbesondere wurden eine Reihe von Wasch- bzw. Gewebebehandlungsmittel vorgeschlagen, die sich durch einen Gehalt an schmutzabweisenden Polymeren, sogenannten "soil repellants" auszeichnen. So beschreibt beispielsweise die **US 3,712,873** die Verwendung von Polyesterpolymeren zusammen mit quartären Ammoniumsalzen als Gewebebehandlungsmittel. Aus den Patentschriften **US 3,959,230, US 3,479,212** und **US 3,416,953** ist die Verwendung von Ethylenterephthalat/Polyethylenoxid-Terephthalat-Copolymeren bei der Herstellung und Behandlung von Polyesterartikeln bekannt. Aus der **US 3,962,152** sind ferner feste Waschmittel bekannt, die einen Gehalt an spezifischen Copolymeren mit niedrigem Ethylenterephthalat/Polyethylenoxidterephtalat-Verhältnis aufweisen.

Auch die Verwendung von schmutzabweisenden Polymeren zusammen mit nichtionischen Polyglycolether-Tensiden in Waschmitteln ist beispielsweise aus der **GB-B-1 377 092** und der **US 4,020, 015** bekannt. In beiden Fällen wird vor der Mitverwendung von anionischen Tensiden ausdrücklich gewarnt. Waschmittel mit einem Gehalt an schmutzabweisenden Polymeren und anionischen Tensiden sind schließlich, aus den Schriften **BE-B 830 614** und **DE-C-28 57 292** bekannt.

Schließlich sind aus der DE-A-3411941 Flüssigwaschmittel auf Basis eines nichtionischen Tensides oder einer Mischung nichtionischer und anionischer Tenside bekannt, die zur Aktivierung der Schmutzlösung spezielle Polyethylenterephthalat-Polymere enthalten. In allen diesen Fällen ist der Grad der Entfernung öliger Anschmutzungen jedoch noch zu verbessern.

Die komplexe Aufgabe der vorliegenden Erfindung hat darin bestanden, oberflächenaktive Mittel auf Basis nichtionischer Tenside zur Verfügung zu stellen, mit deren Hilfe die Entfernung öliger Anschmutzungen von hydrophoben Geweben signifikant verbessert werden kann.

### Beschreibung der Erfindung

Gegenstand der Erfindung sind oberflächenaktive Mittel mit schmutzabweisenden Polymeren, enthaltend Ethylenterephthalat- und/oder Polyethylenglycolterephthalatgruppen, die sich dadurch auszeichnen, daß sie einen Gehalt an Alkyl- und/oder Alkenyloligoglykosiden der Formel (I),

**R**^{**1**}**O-[G]**_{**p**} **(I)**

in der R¹ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht,
aufweisen.

Überraschenderweise wurde gefunden, daß erfindungsgemäße oberflächenaktive Mittel, die nichtionische Tenside vom Typ der Alkyl- und/oder Alkenyloligoglykoside und schmutzabweisende Polymere mit Ethylenterephthalat und/oder Polyethylenterephthalatgruppen enthalten, eine signifikant stärkere Schmutzablösung bewirken als Mittel des Stands der Technik auf Basis der gleichen schmutzablösenden Polymere und konventioneller nichtionischer Tenside vom Typ der Fettalkoholpolyglycolether. Die Erfindung schließt die Erkenntnis ein, daß sich die oberflächenaktiven Mittel in vorteilhafter Weise mit anderen - insbesondere anionischen - Tensiden kombinieren lassen.

### Alkyl- und oder Alkenyloligoglykoside

Alkyl- und Alkenyloligoglykoside stellen bekannte Stoffe dar, die nach den einschlägigen Verfahren der präparativen organischen Chemie erhalten werden können. Stellvertretend für das umfangreiche Schrifttum sei hier auf die Schriften EP-**A1-0 301 298** und **WO 90/03 977** verwiesen.

Die Alkyl- und/oder Alkenyloligoglykoside können sich von Aldosen bzw. Ketosen mit 5 oder 6 Kohlenstoffatomen, vorzugsweise der Glucose ableiten. Die bevorzugten Alkyl- und/oder Alkenyloligoglykoside sind somit Alkyl- und/oder Alkenyloligo**glucoside**.

Die Indexzahl p in der allgemeinen Formel (I) gibt den Oligomerisierungsgrad (DP-Grad), d. h. die Verteilung von Mono- und Oligoglykosiden an und steht für eine Zahl zwischen 1 und 10. Während p in einer gegebenen Verbindung stets ganzzahlig sein muß und hier vor allem die Werte p = 1 bis 6 annehmen kann, ist der Wert p für ein bestimmtes Alkyloligoglykosid eine analytisch ermittelte rechnerische Größe, die meistens eine gebrochene Zahl darstellt. Vorzugsweise werden Alkyl- und/oder Alkenyloligoglykoside mit einem mittleren Oligomerisierungsgrad p von 1,1 bis 3,0 eingesetzt. Aus anwendungstechnischer Sicht sind solche Alkyl- und/oder Alkenyloligoglykoside bevorzugt, deren Oligomerisierungsgrad kleiner als 1,7 ist und insbesondere zwischen 1,2 und 1,4 liegt.

Der Alkyl- bzw. Alkenylrest R¹ kann sich von primären Alkoholen mit 4 bis 11, vorzugsweise 8 bis 10 Kohlenstoffatomen ableiten. Typische Beispiele sind Butanol, Capronalkohol, Caprylalkohol, Caprinalkohol und Undecylalkohol sowie deren technische Mischungen, wie sie beispielsweise bei der Hydrierung von technischen Fettsäuremethylestern oder im Verlauf der Hydrierung von Aldehyden aus der Roelen'schen Oxosynthese anfallen. Bevorzugt sind Alkyloligoglucoside der Kettenlänge C₈-C₁₀ (DP = 1 bis 3), die als Vorlauf bei der destillativen Auftrennung von technischem C₈-C₁₈-Kokosfettalkohol anfallen und mit einem Anteil von weniger als 6 Gew.-% C₁₂-Alkohol verunreinigt sein können sowie Alkyloligoglucoside auf Basis technischer C_{9/11}-Oxoalkohole (DP = 1 bis 3).

Der Alkyl- bzw. Alkenylrest R¹ kann sich ferner auch von primären Alkoholen mit 12 bis 22, vorzugsweise 12 bis 14 Kohlenstoffatomen ableiten. Typische Beispiele sind Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol, sowie deren technische Gemische, die wie oben beschrieben erhalten werden können. Bevorzugt sind Alkyloligoglucoside auf Basis von gehärtetem C_{12/14}-Kokosalkohol mit einem DP von 1 bis 3.

### Schmutzabweisende Polymere

Die im Sinne der Erfindung einzusetzenden schmutzabweisenden Polymere enthalten Ethylenterephthalat- und/oder Polyethylenglycolterephthalatgruppen, wobei das Molverhältnis Ethylenterephthalat zu Polyethylenglycolterephthalat im Bereich von 50 : 50 bis 90 : 10 liegen kann. Das Molekulargewicht der verknüpfenden Polyethylenglycoleinheiten liegt vorzugsweise im Bereich von 750 bis 5000, d.h., der Ethoxylierungsgrad der Polyethylenglycolgruppenhaltigen Polymere kann ca. 15 bis 100 betragen. Die Polymeren zeichnen sich durch ein durchschnittliches Molekulargewicht von etwa 5000 bis 200.000 aus und können eine Block-, vorzugsweise aber eine Random-Struktur aufweisen.

Bevorzugte Polymere sind solche mit Molverhältnissen Ethylenterephthalat/Polyethylenglycolterephthalat von etwa 65 : 35 bis etwa 90 : 10, vorzugsweise von etwa 70 : 30 bis 80 : 20. Weiterhin bevorzugt sind solche Polymeren, die verknüpfende Polyethylenglycoleinheiten mit einem Molekulargewicht von 750 bis 5000, vorzugsweise von 1000 bis etwa 3000 und ein Molekulargewicht des Polymeren von etwa 10.000 bis etwa 50.000 aufweisen. Beispiele für handelsübliche Polymere sind die Produkte Milease^{(R)} T (ICI) oder Repelotex^{(R)} SRP 3 (Rhone-Poulenc).

Die erfindungsgemäßen oberflächenaktiven Mittel können die Alkyl- und/oder Alkenyloligoglykoside und die schmutzabweisenden Polymere im Gewichtsverhältnis 70 : 30 bis 99 : 1, vorzugsweise 75 : 25 bis 90 : 10 enthalten. Die Angaben beziehen sich jeweils auf den Aktiv- bzw. Feststoffgehalt der Produkte.

### Tenside

Die oberflächenaktiven Mittel können weitere anionische, nichtionische, kationische und/oder amphotere bzw. zwitterionische Tenside enthalten.

Typische Beispiele für **anionische Tenside** sind Alkylbenzolsulfonate, Alkansulfonate, Olefinsulfonate, Alkylethersulfonate, Glycerinethersulfonate, α-Methylestersulfonate, Sulfofettsäuren, Alkylsulfate, Fettalkoholethersulfate, Glycerinethersulfate, Hydroxymischethersulfate, Monoglycerid(ether)sulfate, Fettsäureamid(ether)sulfate, Sulfosuccinate, Sulfosuccinamate, Sulfotriglyceride, Amidseifen, Ethercarbonsäuren, Isethionate, Sarcosinate, Tauride, Alkyloligoglucosidsulfate, Acyllactylate und Alkyl(ether)phosphate. Sofern die anionischen Tenside Polyglycoletherketten enthalten, können sie eine konventionelle, vorzugsweise jedoch eine eingeengte Homologenverteilung aufweisen.

Typische Beispiele für **nichtionische Tenside** sind Fettalkoholpolyglycolether, Alkylphenolpolyglycolether, Fettsäurepolyglycolester, Fettsäureamidpolygylcolether, Fettaminpolyglycolether, alkoxylierte Triglyceride, Fettsäureglucamide, Polyolfettsäureester, Zuckerester, Sorbitanester und Polysorbate. Sofern die nichtionischen Tenside Polyglycoletherketten enthalten, können sie eine konventionelle, vorzugsweise jedoch eine eingeengte Homologenverteilung aufweisen.

Typische Beispiele für **kationische Tenside** sind quartäre Ammoniumverbindungen und quaternierten Difettsäuretrialkanolaminester.

Typische Beispiele für **amphotere bzw. zwitterionische Tenside** sind Alkylbetaine, Alkylamidobetaine, Aminopropionate, Aminoglycinate, Imidazoliniumbetaine und Sulfobetaine.

Bei den genannten Tensiden handelt es sich ausschließlich um bekannte Verbindungen. Hinsichtlich Struktur und Herstellung dieser Stoffe sei auf einschlägige Übersichtsarbeiten beispielsweise **J.Falbe (ed.), "Surfactants in Consumer Products", Springer Verlag, Berlin, 1987, S.54-124** oder **J.Falbe (ed.), "Katalysatoren, Tenside und Mineralöladditive", Thieme Verlag, Stuttgart, 1978, S.123-217** verwiesen.

### Gewerbliche Anwendbarkeit

Die erfindungsgemäßen oberflächenaktiven Mittel erlauben die vollständige und rückstandsfreie Entfernung öliger Anschmutzungen von hydrophoben Polyestergeweben sowie deren vorteilhafte Ausrüstung gegenüber neuen Ölanschmutzungen. Demzufolge sind unter dem Oberbegriff oberflächenaktive Mittel insbesondere Pulverwaschmittel, Flüssigwaschmittel, Avivagemittel, Wäschevorbehandlungsmittel sowie Textil- und Faserhilfsmittel zu verstehen.

Die oberflächenaktiven Mittel können weitere bekannte Inhaltsstoffe wie beispielsweise Builder, Salze, Bleichmittel, Bleichaktivatoren, optische Aufheller, Vergrauungsinhibitoren, Lösungsvermittler, Entschäumer und Enzyme aufweisen.

Übliche **Builder** sind Natriumaluminiumsilicate (Zeolithe), Phosphate, Phosphonate, Ethylendieamintetraessigsäure, Nitrilotriacetat, Citronensäure und/oder Polycarboxylate. Als **Salze** bzw. Stellmittel kommen beispielsweise Natriumsulfat, Natriumcarbonat oder Natriumsilicat (Wasserglas) in Betracht. Als typische Einzelbeispiele für weitere Zusatzstoffe sind Natriumborat, Stärke, Saccharose, Polydextrose, TAED, Stilbenverbindungen, Methylcellulose, Toluolsulfonat, Cumolsulfonat, langkettige Seifen, Silicone, Lipasen und Proteasen zu nennen.

Die nachfolgenden Beispiele sollen den Gegenstand der Erfindung näher erläutern, ohne ihn darauf einzuschränken.

### Beispiele

### I. Eingesetzte Tenside und Rezepturen

A1) C₈-C₁₆-Kokosalkyloligoglucosid (Plantaren^{(R)} APG-2000, Henkel KGaA, Düsseldorf/FRG)
A2) C₁₂-C₁₄-Kokosalkyloligoglucosid (Plantaren^{(R)} APG-1200, Henkel KGaA, Düsseldorf/FRG)

B1) Schmutzabweisendes Polymer mit Ethylenterephthalat- und Polyethylenglycolterephthalat-Gruppen (Repelotex^{(R)}, Rhone-Poulenc)

C1) C₁₂-C₁₄-Kokosfettalkohol-7-EO-Addukt (Dehydol^{(R)} LS-7, Henkel KGaA, Düsseldorf/FRG)
C2) C₁₆-C₁₈-Talgfettalkohol-7-EO-Addukt (Dehydol^{(R)} TA-7, Henkel KGaA, Düsseldorf/FRG)

D1) C₁₆-C₁₈-Talgfettalkoholsulfat-Natriumsalz (Sulfopon^{(R)} T55, Henkel KGaA, Düsseldorf/FRG)
D2) C₁₆-C₁₈-Talgfettsäuremethylester-Natriumsalz (Texin^{(R)} ES68, Henkel KGaA, Düsseldorf/FRG)
D3) Dodecylbenzolsulfonat-Natriumsalz (Maranil^{(R)} A55, Henkel KGaA, Düsseldorf/FRG)

**Tab.1.:**

| Eingesetzte Rezepturen Prozentangaben als Gew.-% | | | | | | | | |
|---|---|---|---|---|---|---|---|---|
| Rezeptur | A1 % | A2 % | B1 % | C1 % | C2 % | D1 % | D2 % | D3 % |
| R1 | 90 | 0 | 10 | 0 | 0 | 0 | 0 | 0 |
| R2 | 0 | 90 | 10 | 0 | 0 | 0 | 0 | 0 |
| R3 | 80 | 0 | 10 | 0 | 0 | 10 | 0 | 0 |
| R4 | 80 | 0 | 10 | 0 | 0 | 0 | 10 | 0 |
| R5 | 80 | 0 | 10 | 0 | 0 | 0 | 0 | 10 |
| R6 | 0 | 0 | 10 | 90 | 0 | 0 | 0 | 0 |
| R7 | 0 | 0 | 10 | 0 | 90 | 0 | 0 | 0 |

Die Rezepturen R1 bis R5 sind erfindungsgemäß, die Rezepturen R6 und R7 dienen dem Vergleich.

### II. Waschversuche

In einem Launderometer wurde Polyestergwebe mit den Rezepturen R1 bis R7 vorbehandelt. Die Messungen wurden unter den folgenden Bedingungen durchgeführt:

| | |
|---|---|
| Waschtemperatur | 40°C |
| Wasserhärte | 16°d |
| Dosierung | 10 g Rezepturen R1 bis R7 |
| Flottenbelastung | 10 Teile Wasser zu 1 Teil Gewebe |

Die vorbehandelten Gewebe wurden anschließend getrocknet, mit 100 µl Mineralöl angeschmutzt und wiederum getrocknet.

Anschließend wurden die Gewebe in einer Haushaltswaschmaschine unter standardisierten Bedingungen (40°C, 16°d) mit einem handelsüblichen Universalwaschmittel (Dixan^{(R)}, Henkel KGaA, Düsseldorf/FRG) gewaschen. Anschließend wurde der erreichte Weißgrad photometrisch gegen einen Standard (= 100 % Remission) bestimmt. Die Ergebnisse sind in Tab.2 zusammengefaßt:

**Tab.2:**

| Waschversuche | | |
|---|---|---|
| Bsp. | Rezeptur | Weißgrad %-Rem |
| 1 | R1 | 78 |
| 2 | R2 | 76 |
| 3 | R3 | 81 |
| 4 | R4 | 80 |
| 5 | R5 | 81 |
| V1 | R6 | 62 |
| V2 | R7 | 61 |

Man erkennt, daß bei Verwendung der erfindungsgemäßen oberflächenaktiven Vorbehandlungsmittel eine signifikant verbesserte Ablösung des Ölschmutzes erreichen läßt als bei Einsatz von Mitteln des Stands der Technik auf Basis konventioneller nichtionischer Tenside.

## Patentansprüche

1. Oberflächenaktive Mittel mit schmutzabweisenden Polymeren, enthaltend Ethylenterephthalat- und/oder Polyethylenglycolterephthalat-gruppen,
**dadurch gekennzeichnet,** daß sie einen Gehalt an Alkyl- und/oder Alkenyloligoglykosiden der Formel (I),
**R**^{**1**}**O-[G]**_{**p**} **(I)**
in der R¹ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht,
aufweisen.

2. Oberflächenaktive Mittel nach Anspruch 1, **dadurch gekennzeichnet,** daß sie Alkyl- und/oder Alkenyloligoglykoside der Formel (I) enthalten, in der R¹ für einen Alkylrest mit 8 bis 10 Kohlenstoffatomen, G für einen Glucoserest und p für Zahlen von 1 bis 10 steht.

3. Oberflächenaktive Mittel nach Anspruch 1, **dadurch gekennzeichnet,** daß sie Alkyl- und/oder Alkenyloligoglykoside der Formel (I) enthalten, in der R¹ für einen Alkyl- und/oderAlkenylrest mit 12 bis 22 Kohlenstoffatomen, G für einen Glucoserest und p für Zahlen von 1 bis 10 steht.

4. Oberflächenaktive Mittel nach den Ansprüchen 1 bis 3, **dadurch gekennzeichnet,** daß sie schmutzabweisende Polymere enthalten, bei denen das Verhältnis Ethylenterephthalat zu Polyethylenglycolterephthalat im Bereich von 50 : 50 bis 90 : 10 liegt.

5. Oberflächenaktive Mittel nach den Ansprüchen 1 bis 4, **dadurch gekennzeichnet,** daß sie schmutzabweisende Polymere enthalten, bei denen das Molekulargewicht der verknüpfenden Polyethylenglycoleinheiten im Bereich von 750 bis 5000 liegt.

6. Oberflächenaktive Mittel nach den Ansprüchen 1 bis 4, **dadurch gekennzeichnet,** daß sie schmutzabweisende Polymere enthalten, die ein durchschnittliches Molekulargewicht von etwa 5000 bis 200.000 aufweisen.

7. Oberflächenaktive Mittel nach den Ansprüchen 1 bis 5, **dadurch gekennzeichnet,** daß sie die Alkyl- und/oder Alkenyloligoglykoside und die schmutzabweisenden Polymere im Gewichtsverhältnis 70 : 30 bis 99 : 1 enthalten.

## Claims

1. Surface-active formulations containing soil-repellent polymers bearing ethylene terephthalate and/or polyethylene glycol terephthalate groups, characterized in that they contain alkyl and/or alkenyl oligoglycosides corresponding to formula (I):
**R**^{**1**}**O-[G]**_{**p**} **(I)**
where R¹ is an alkyl and/or alkenyl radical containing 4 to 22 carbon atoms, G is a sugar unit containing 5 or 6 carbon atoms and p is a number of 1 to 10.

2. Surface-active formulations as claimed in claim 1, characterized in that they contain alkyl and/or alkenyl oligoglycosides corresponding to formula (I) where R¹ is an alkyl radical containing 8 to 10 carbon atoms, G is a glucose unit and p is a number of 1 to 10.

3. Surface-active formulations as claimed in claim 1, characterized in that they contain alkyl and/or alkenyl oligoglycosides corresponding to formula (I) where R¹ is an alkyl and/or alkenyl radical containing 12 to 22 carbon atoms, G is a glucose unit and p is a number of 1 to 10.

4. Surface-active formulations as claimed in claims 1 to 3, characterized in that they contain soil-repellent polymers in which the ratio of ethylene terephthalate to polyethylene glycol terephthalate is 50:50 to 90:10.

5. Surface-active formulations as claimed in claims 1 to 4, characterized in that they contain soil-repellent polymers in which the molecular weight of the linking polyethylene glycol units is in the range from 750 to 5,000.

6. Surface-active formulations as claimed in claims 1 to 4, characterized in that they contain soil-repellent polymers which have an average molecular weight in the range from about 5,000 to 200,000.

7. Surface-active formulations as claimed in claims 1 to 5, characterized in that they contain the alkyl and/or alkenyl oligoglycosides and the soil-repellent polymers in a ratio by weight of 70:30 to 99:1.

## Revendications

1. Produits tensioactifs avec des polymères qui protègent contre les salissures renfermant des groupes téréphtalate d'éthylène et/ou téréphtalate de polyéthylèneglycol,
caractérisés en ce qu'
ils possèdent une teneur en alkyl et/ou alkényloligoglycosides de formule (I) :
R¹O-[G]ₚ (I)
dans laquelle R¹ représente un radical alkyle et/ou alkenyle ayant de 4 à 22 atomes de carbone, G représente un radical sucre ayant de 5 ou 6 atomes de carbone et p représente des nombres allant de 1 à 10.

2. Produits tensioactifs selon la revendication 1,
caractérisés en ce qu'
ils renferment des alkyl- et/ou alkényloligoglycosides de formule (I), dans laquelle R¹ représente un radical alkyle ayant de 8 à 10 atomes de carbone, G représente un radical glucose et p représente des nombres allant de 1 à 10.

3. Produits tensioactifs selon la revendication 1,
caractérisés en ce qu'
ils renferment des alkyl- et/ou alkényloligoglycosides de formule (I), dans laquelle R¹ représente un radical alkyl et/ou alkényle ayant de 12 à 22 atomes de carbone, G représente un reste de glucose et p représente des nombres allant de 1 à 10.

4. Produits tensioactifs selon les revendications 1 à 3,
caractérisés en ce qu'
ils renferment des polymères qui protègent contre les salissures, dans lesquels le rapport téréphtalate d'éthylène à téréphtalate de polyéthylèneglycol se situe dans la plage de 50:50 à 90:10.

5. Produits tensioactifs selon les revendication 1 à 4,
caractérisés en ce qu'
ils renferment des polymères qui protègent contre les salissures dans lesquels le poids moléculaire des unités de polyéthylèneglycol se combinant se situe dans la plage de 750 à 5 000.

6. Produits tensioactifs selon les revendication 1 à 4,
caractérisés en ce qu'
ils renferment des polymères qui protègent contre les salissures, qui possèdent un poids moléculaire moyen d'environ 5 000 à 200 000.

7. Produits tensioactifs selon les revendication 1 à 5,
caractérisés en ce qu'
ils renferment les alkyl et/ou alkényloligoglycosides et les polymères qui protègent contre les salissures dans un rapport pondéral allant de 70:30 à 99:1.
